# EUROPÄISCHE PATENTSCHRIFT

(11) **EP 2 539 195 B1**
(45) Veröffentlichungstag und Bekanntmachung des Hinweises auf die Patenterteilung: **21.06.2017**
(21) Anmeldenummer: 11700824.3
(22) Anmeldetag: 11.01.2011
(51) Int. Cl.: B60T 8/48, B60T 8/26

(54) **BREMSSYSTEM FÜR EIN FAHRZEUG UND VERFAHREN ZUM BETREIBEN EINES BREMSSYSTEMS EINES FAHRZEUGS**
BRAKE SYSTEM FOR A VEHICLE AND METHOD FOR OPERATING A BRAKE SYSTEM OF A VEHICLE
SYSTÈME DE FREINAGE POUR VÉHICULE ET PROCÉDÉ POUR FAIRE FONCTIONNER UN SYSTÈME DE FREINAGE D'UN VÉHICULE

(30) Priorität: 24.02.2010 DE 102010002280
(43) Veröffentlichungstag der Anmeldung: 02.01.2013
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE)
(86) Internationale Anmeldenummer: PCT/EP2011/050247
(87) Internationale Veröffentlichungsnummer: WO 2011/104046

(56) Entgegenhaltungen:
- EP-A2- 1 470 979
- WO-A1-2009/149977
- DE-A1- 19 534 451
- DE-A1-102004 044 599
- DE-A1-102006 046 935
- DE-C1- 4 009 640

## Beschreibung

Die Erfindung betrifft ein Bremssystem für ein Fahrzeug. Des Weiteren betrifft die Erfindung ein Verfahren zum Betreiben eines Bremssystems eines Fahrzeugs.

### Stand der Technik

Elektro- und Hybridfahrzeuge weisen ein für ein rekuperatives Bremsen ausgelegtes Bremssystem mit einem welcher bei dem rekuperativen Bremsen generatorisch betriebenen Elektromotor auf. Die bei dem rekuperativen Bremsen gewonnene elektrische Energie wird nach einem Zwischenspeichern vorzugsweise für ein Beschleunigen des Fahrzeugs verwendet. Auf diese Weise sind eine Verlustleistung, welche ein herkömmliches Fahrzeug bei einem häufigen Bremsen während einer Fahrt aufweist, ein Energieverbrauch und eine Schadstoffemission des Elektro- oder Hybridfahrzeugs reduzierbar.

Allerdings setzt das generatorische Betreiben des Elektromotors, beispielsweise des elektrischen Antriebsmotors, in der Regel eine bestimmte Mindestgeschwindigkeit des Fahrzeugs voraus. Ein rekuperatives Bremssystem ist somit häufig nicht in der Lage, so lange ein generatorisches Bremsmoment auf die Räder des Fahrzeugs auszuüben, bis sich das zuvor fahrende Fahrzeug im Stillstand befindet. Ein Hybridfahrzeug weist deshalb zusätzlich zu dem rekuperativ betriebenen Elektromotor oft noch ein hydraulisches Bremssystem auf, mittels welchem zumindest in einem niedrigen Geschwindigkeitsbereich die wegfallende Bremswirkung der rekuperativen Bremse kompensierbar ist. In diesem Fall kann auch bei einem vollen elektrischen Energiespeicher, wenn die rekuperative Bremse meistens kein Bremsmoment auf die Räder ausübt, das gesamte Bremsmoment über das hydraulische Bremssystem aufgebracht werden.

Andererseits ist es in manchen Situationen wünschenswert, eine möglichst niedrige hydraulische Bremskraft auf die Räder auszuüben, um einen hohen Rekuperationsgrad zu erzielen. Beispielsweise wird nach Schaltvorgängen häufig der abgekoppelte Generator als rekuperative Bremse aktiviert, um ein verlässliches Aufladen des Zwischenspeichers und eine hohe Energieeinsparung zu gewährleisten.

Im Allgemeinen bevorzugt ein Fahrer ein Gesamtbremsmoment seines Fahrzeugs, welches seiner Betätigung eines Bremseingabeelementes, wie beispielsweise seiner Bremspedalbetätigung, unabhängig von einem Aktivieren oder einem Deaktivieren der rekuperativen Bremse entspricht. Manche Elektro- und Hybridfahrzeuge weisen deshalb eine Automatik auf, welche das Bremsmoment des hydraulischen Bremssystems an das aktuelle Bremsmoment der rekuperativen Bremse so anpassen soll, dass ein gewünschtes Gesamtbremsmoment eingehalten wird. Der Fahrer muss damit nicht selbst die Aufgabe des Verzögerungsreglers übernehmen, indem er das Bremsmoment des hydraulischen Bremssystems mittels einer entsprechenden Betätigung des Bremseingabeelements an das aktuelle Bremsmoment der rekuperativen Bremse anpasst. Beispiele für eine derartige Automatik sind Brake-by-Wire-Bremssysteme, insbesondere EHB-Systeme. Aufgrund ihrer aufwändigen Elektronik, Mechanik und Hydraulik sind Brake-by-Wire-Bremssysteme jedoch relativ teuer.

Als Alternative zu den Brake-by-Wire-Bremssystemen beschreibt die WO 2009/149977 A1ein Bremssystem, welches einen von einem Hauptbremszylinder entkoppelten und an ein Bremsmediumreservoir angeschlossenen ersten Bremskreis umfasst. Diesem ersten Bremskreis ist eine Radachse zugeordnet, auf welche ein rekuperatives Bremsmoment eines generatorisch betriebenen Elektromotors ausübbar ist. Zwei weitere Bremskreise sind so an den Hauptbremszylinder gekoppelt, dass der Fahrer direkt in sie hineinbremsen und somit ein unmittelbares hydraulisches Bremsmoment auf die den zwei weiteren Bremskreisen zugeordneten Räder ausüben kann.

Die DE 195 34 451 A1 beschreibt ein Bremssystem mit zwei jeweils an einem Hauptbremszylinder angebundenen Bremskreisen. Jeder der zwei Bremskreise ist außerdem über je ein Rückschlagventil so an einem Bremsmediumreservoir angebunden, dass Bremsflüssigkeit aus dem Bremsmediumreservoir in jeden der zwei Bremskreise pumpbar ist.

Des Weiteren beschreibt die EP 1 470 979 A2 ein Fahrzeugbremssystem mit zwei an einem Hauptbremszylinder angebundenen Bremskreisen. Die zwei Bremskreise sind über je ein Rückschlagventil und über ein gemeinsames Trennventil so an einem Bremsmediumreservoir angebunden, dass Bremsflüssigkeit aus dem Bremsmediumreservoir in die zwei Bremskreise pumpbar ist.

### Offenbarung der Erfindung

Die Erfindung schafft ein Bremssystem für ein Fahrzeug mit den Merkmalen des Anspruchs 1 und ein Verfahren zum Betreiben eines Bremssystems eines Fahrzeugs mit den Merkmalen des Anspruchs 10.

Ein Vorteil des hier beschriebenen Bremssystems besteht in der geringen Anzahl von elektrisch ansteuerbaren Ventilen. Darunter wird ein Ventil verstanden, welches mittels eines elektrischen Steuersignals/Schaltsignals zumindest in einen geöffneten und in einen geschlossenen Zustand schaltbar ist. Dies reduziert die Kosten, insbesondere für eine Elektronik des Bremssystems, welche geeignet ist, um alle benötigten elektrisch ansteuerbaren/schaltbaren Ventile zu steuern.

Die vorliegende Erfindung ermöglicht das Ausbilden zweier Bremskreise, welche jeweils einem Rad eines Fahrzeugs zugeordnet sind, wobei auf eine Ausstattung eines Hauptschaltventils (Hochdruckschaltventils) für jeden der beiden Bremskreise verzichtet werden kann. Stattdessen kann die Funktion der beiden eingesparten Hauptschaltventile (Hochdruckschaltventile) über das Trennventil, welches an das Bremsmediumreservoir angekoppelt ist, ausgeführt werden. Das Trennventil ersetzt somit die beiden eingesparten Hauptschaltventile.

Durch die Einsparung der beiden Hauptschaltventile mittels des bereit gestellten Trennventils ist die Gesamtanzahl der von dem Bremssystem benötigten mittels eines elektrischen Schaltsignals/Steuersignals zumindest in einen offenen Zustand und in einen geschlossenen Zustand schaltbaren/steuerbaren Ventile reduziert. Dies reduziert die Herstellungskosten für das Bremssystem. Zusätzlich ist, wie unten genauer erläutert wird, bei einer reduzierten Anzahl von elektrisch schaltbaren/steuerbaren Ventilen eine kostengünstigere und einfacher herzustellende Steuerelektronik verwendbar.

Der von dem Hauptbremszylinder abgekoppelte dritte Bremskreis wird auf einfache Weise für einen aktiven Aufbau eines hydraulischen Bremsmoments in dem dritten und/oder vierten Radbremszylinder verwendet. Beispielsweise kann in diesem Fall das hydraulische Bremsmoment in dem dritten und/oder vierten Radbremszylinder so eingestellt werden, dass ein zeitlich variierendes Generator-Bremsmoment verblendbar ist. Damit besteht die Möglichkeit, mittels eines Sensors und/oder mittels einer Schätzung zu ermitteln, welches Gesamt-Bremsmoment von dem Fahrer und/oder einem automatischen Steuersystem des Fahrzeugs gewünscht wird und welches aktuell rekuperative Bremsmoment durch die rekuperative Bremse ausgeübt wird. Unter zusätzlicher Berücksichtigung der mittels des ersten Radbremszylinders und des zweiten Radbremszylinders ausgeübten hydraulischen Bremsmomente kann ermittelt werden, welche Differenz zwischen den ausgeübten Bremsmomenten und dem gewünschten Gesamt-Bremsmoment besteht. Ein der ermittelten Differenz entsprechendes hydraulisches Bremsmoment kann anschließend mittels des zusätzlichen Bremskreises aktiv ausgeübt werden.

Dies ermöglicht ein Verblenden eines Generator-Bremsmoments, ohne dass der Fahrer einen zusätzlichen Arbeitsaufwand ausführen muss. Für die Ausführung der in dem oberen Absatz beschriebenen Verfahrensschritte ist keine teure Elektronik notwendig. Eine ausreichende Rekuperationseffizienz ist somit bei einer Verwendung der vorliegenden Erfindung zu vertretbaren Kosten gewährleistet. Die vorliegende Erfindung bietet somit eine einfach betätigbare und kostengünstige Alternative zu einem herkömmlichen Brake-by-Wire Bremssystem, welche insbesondere für heck- oder allradgetriebene Fahrzeuge sehr vorteilhaft ist. Die Erfindung ist jedoch auch für den Frontantrieb mit einer By-Wire-Vorderachse einsetzbar. Dabei ist ein Verblendvorgang gewährleistet, welcher keine Auswirkungen auf den Bremsweg hat.

Die vorliegende Erfindung ist jedoch nicht auf eine Aufwendung in einem Elektro- oder Hybridfahrzeug beschränkt. Beispielsweise lässt sich auch eine querbeschleunigungsabhängige Bremskraftverteilung mittels der vorliegenden Erfindung realisieren. Bei einer querbeschleunigungsabhängigen Bremskraftverteilung wird die Bremskraft an einigen Rädern des Fahrzeugs, vorzugsweise an den beiden Hinterachsenrädern, entsprechend einer Aufstampfkraft, welche bei einer Fahrt um eine Kurve auftritt, aufgeteilt. Auf diese Weise kann der Reibwert der Räder, vor allem der Reibwert der beiden Hinterräder, an die Querbeschleunigung angeglichen werden. Das Fahrzeug bremst somit in Kurven stabiler. Vorzugsweise wird zum Ermitteln des mittels des ersten Bremskreises aktiv einzustellenden hydraulischen Bremsmoments eine von einer Sensoreinrichtung ermittelte Querbeschleunigung herangezogen.

Zusätzlich ist eine Verwendung der vorliegenden Erfindung für ein dynamisches Kurvenbremsen möglich. Bei dem dynamischen Kurvenbremsen wird die Bremskraft an einem kurveninneren Rad gegenüber der Bremskraft an einem kurvenäußeren Rad erhöht. Dies erzielt ein dynamischeres Fahrverhalten.

Des Weiteren kann die Erfindung auch für ein vorteilhafteres Bremsen während einer Rückwärtsfahrt verwendet werden. Insbesondere wird dabei durch eine Erhöhung der Bremskraft an der Hinterachse eine für eine Rückwärtsfahrt bessere Bremskraftverteilung eingestellt. Man spricht dabei auch von einer Rückwärts-Bremskraftverteilung. Vor allem bei einer langsamen Rückwärtsfahrt bergab ermöglicht dies ein deutlich stabileres Bremsverhalten.

Gleichzeitig gewährleistet die vorliegende Erfindung eine Möglichkeit zur Verbesserung des Pedalgefühls durch die Abkopplung des dritten Bremskreises von dem Hauptbremszylinder, so dass der Fahrer den dritten Bremskreis nicht mehr direkt über eine auf das Bremspedal ausgeübte Kraft steuern muss. Auf diese Weise lässt sich auch der Pedalweg verkürzen.

Es wird darauf hingewiesen, dass unter dem Bremsmediumreservoir nicht der Hauptbremszylinder zu verstehen ist. Stattdessen kann unter dem Bremsmediumreservoir ein Bremsmedium-Volumen oder ein Bremsmedium-Behälter verstanden werden, dessen Innendruck unabhängig von einem Innendruck des Hauptbremszylinders einstellbar ist oder einem fest vorgegebenen Druck, wie beispielsweise dem Atmosphärendruck, entspricht.

Mittels der beiden Rückschlagventile und ihrer Ausrichtung ist gewährleistbar, dass ein unerwünschter Bremsmediumaustausch zwischen den beiden dem ersten und dem zweiten Radbremszylinder zugeordneten Bremskreisen unterbunden ist. Gleichzeitig ist gewährleistet, dass sofern dies gewünscht ist, ein zusätzliches Bremsmediumvolumen über das zumindest teilweise geöffnete Trennventil mittels der ersten Pumpe und/oder der zweiten Pumpe in den zugeordneten ersten und/oder zweiten Radbremszylinder pumpbar ist. Somit ist ein radindividueller Fremdkraftbremsdruck, d. h. ein nicht durch eine Kraftausübung auf den Hauptbremszylinder zurückzuführender Bremsdruck, in dem ersten oder dem zweiten Radbremszylinder vorteilhaft erzeugbar.

Beispielsweise kann das erste Rückschlagventil derart ausgerichtet sein, dass eine Bremsmediumverschiebung von der erste Pumpe zu dem Trennventil durch das erste Rückschlagventil unterbunden ist und/oder das zweite Rückschlagventil derart ausgerichtet sein, dass eine Bremsmediumverschiebung von der zweiten Pumpe zu dem Trennventil durch das zweite Rückschlagventil unterbunden ist. Auf diese Weise ist ein unerwünschter Bremsmediumaustausch zwischen dem mit dem ersten Radbremszylinder und dem zweiten Randbremszylinder zusammenwirkenden Untereinheiten des Bremssystems verlässlich unterbunden.

In einer vorteilhaften Ausführungsform des Bremssystems kann eine erste Speicherkammer des Bremssystems mit dem ersten Radbremszylinder hydraulisch derart verbunden sein, dass ein neuntes Bremsmediumvolumen aus dem ersten Radbremszylinder in die erste Speicherkammer verschiebbar ist und/oder eine zweite Speicherkammer des Bremssystems mit dem zweiten Radbremszylinder hydraulisch derart verbunden sein, dass ein zehntes Bremsmediumvolumen aus dem zweiten Radbremszylinder in die zweite Speicherkammer verschiebbar ist. Somit ist ein schneller Abbau eines mittels des ersten Radbremszylinders aufgebauten ersten hydraulischen Bremsmoments und/oder eines mittels des zweiten Radbremszylinders aufgebauten zweiten hydraulischen Bremsmoments über ein Verschieben des fünften Bremsmediumsvolumens und/oder des sechsten Bremsmediumvolumens in die jeweilige Speicherkammer schnell ausführbar.

Vorteilhafterweise ist mittels des ersten Radauslassventils des Bremssystems eine Bremsmediumverschiebung von dem ersten Radbremszylinder zu der ersten Speicherkammer steuerbar. Bevorzugter Weise ist auch mittels des zweiten Radauslassventils des Bremssystems eine Bremsmediumverschiebung von dem zweiten Radbremszylinder zu der zweiten Speicherkammer steuerbar. Dies verbessert die Genauigkeit beim Einstellen des ersten hydraulischen Bremsmoments und/oder des zweiten hydraulischen Bremsmoments.

Insbesondere kann das Bremssystem einen Generator umfassen, mittels welchem ein Generator-Bremsmoment zumindest auf ein dem dritten Radbremszylinder zugeordnetes Rad ausübbar ist. Da das dritte hydraulische Bremsmoment des dritten Radbremszylinders aktiv aufbaubar ist, kann über ein Bereitstellen des dritten hydraulischen Bremsmoments das zeitlich variierende Generator-Bremsmoment vorteilhaft verblendet werden.

Des Weiteren können die erste Pumpe, die zweite Pumpe und die dritte Pumpe auf einer gemeinsamen Welle eines Motors angeordnet sein. Dies reduziert die benötigte Anzahl von Motoren.

Die erfindungsgemäße Begrenzung der von dem Bremssystem benötigten Ventile, welche elektrisch zumindest in den geöffneten Zustand und in den geschlossenen Zustand schaltbar sind, auf die Anzahl von zwölf reduziert die Anforderungen und/oder die Kosten für eine als Steuervorrichtung geeignete Elektronik.

In einer weiteren vorteilhaften Ausführungsform kann die Steuervorrichtung des Bremssystems dazu ausgelegt sein, eine von einer fahrzeugeigenen Komponente bereitgestellte Fremdkraftbremsvorgabe zu empfangen, und nach einem Empfangen der Fremdkraftbremsvorgabe das Trennventil in einen zumindest teilgeöffneten Zustand zu steuern und die erste Pumpe und/oder die zweite Pumpe unter Berücksichtigung der Fremdkraftbremsvorgabe derart anzusteuern, dass das siebte Bremsmediumvolumen aus dem Bremsmediumreservoir über das zumindest teilgeöffnete Trennventil in den ersten Radbremszylinder und/oder das achte Bremsmediumvolumen aus dem Bremsmediumreservoir über das zumindest teilgeöffnete Trennventil in den zweiten Radbremszylinder pumpbar sind. Die mittels der Steuervorrichtung ausführbare Fremdkraftbremsvorgabe kann eine Vorgabe einer automatischen Geschwindigkeitssteuervorrichtung und/oder Fahrzeugsicherheitssystems für ein automatisches Bremsen des Fahrzeugs nach einem Feststellen einer dies erfordernden Verkehrssituation sein. Somit kann mittels des hier beschriebenen Bremssystems zusätzlich zu einem direkten Einbremsen des Fahrers in den ersten Radbremszylinder und/oder den zweiten Radbremszylinder auch eine Fremdkraftbremsung ausgeführt werden, welche keine Kraftausübung auf den Hauptbremszylinder erfordert.

Die in den oberen Absätzen beschriebenen Vorteile sind auch bei einem Fahrzeug mit einem entsprechenden Bremssystem gewährleistet.

Auch mittels eines korrespondierenden Verfahrens zum Betreiben eines Bremssystems eines Fahrzeugs sind die oben beschriebenen Vorteile realisierbar.

### Kurze Beschreibung der Zeichnungen

Weitere Merkmale und Vorteile der Erfindung werden nachfolgend anhand der Figuren erläutert. Es zeigen:
- Fig. 1: einen Schaltplan einer Ausführungsform des Bremssystems; und
- Fig. 2: ein Flussdiagramm einer Ausführungsform des Verfahrens.

### Ausführungsformen der Erfindung

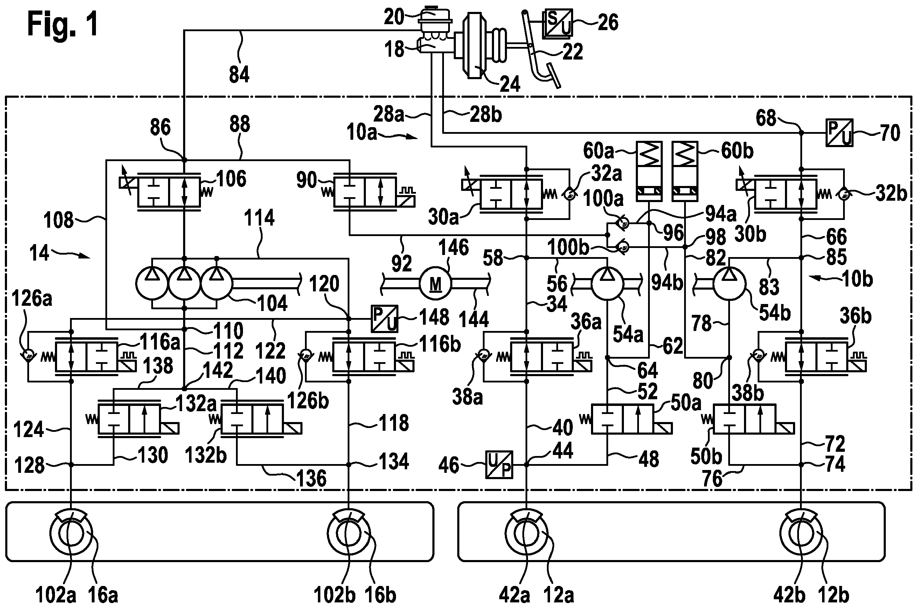

Fig. 1 zeigt einen Schaltplan einer Ausführungsform des Bremssystems.

Das in Fig. 1 schematisch dargestellte Bremssystem ist nicht nur in einem Elektro- oder Hybridfahrzeug einsetzbar. Stattdessen kann das Bremssystem auch in einem Fahrzeug eingesetzt werden, um beispielsweise eine bevorzugte Bremskraftverteilung an den Rädern des Fahrzeugs bei einem Bremsen während einer Kurvenfahrt und/oder einer Rückwärtsfahrt zu gewährleisten. Die im Weiteren beschriebenen Hinweise auf die Einsetzbarkeit des Bremssystems in einem Elektro- oder Hybridfahrzeug sind lediglich beispielhaft zu verstehen.

Das Bremssystem umfasst einen ersten Bremskreis 10a zum Abbremsen eines ersten Rads 12a, einen zweiten Bremskreis 12b zum Abbremsen eines zweiten Rads 12b und einen dritten Bremskreis 14 zum Abbremsen eines dritten Rads 16a und eines vierten Rads 16b. Das erste Rad 12a und das zweite Rad 12b können an einer gemeinsamen Achse eines Fahrzeugs, beispielsweise an der Hinterachse, angeordnet sein. Die Anwendbarkeit des Bremssystems ist jedoch nicht auf eine achsweise Anordnung des ersten Rads 12a und des zweiten Rads 12b beschränkt. Als Alternative zu einer achsweisen Anordnung können die Räder 12a und 12b auch auf einer Seite des zugehörigen Fahrzeugs oder diagonal an dem Fahrzeug angeordnet sein.

Es wird darauf hingewiesen, dass das dargestellte Bremssystem nicht auf die feste Anzahl von vier Rädern 12a, 12b, 16a und 16b beschränkt ist. Stattdessen kann das Bremssystem so erweitert werden, dass eine größere Anzahl von Rädern abbremsbar ist. Insbesondere kann das Bremssystem in diesem Fall mindestens zwei Bremskreise aufweisen, welche dem dritten Bremskreis 14 entsprechen.

Das Bremssystem weist einen Hauptbremszylinder 18 und ein Bremsmediumreservoir 20 auf. Zwischen dem Hauptbremszylinder 18 und dem Bremsmediumreservoir 20 kann eine Bremsmedium-Austauschbohrung, wie beispielsweise eine Schnüffelbohrung, ausgebildet sein. Der Hauptbremszylinder 18 und das Bremsmediumreservoir 20 können jedoch auch ohne eine hydraulische Verbindung ausgebildet sein.

An dem Hauptbremszylinder 18 kann ein Bremseingabeelement 22, wie beispielsweise ein Bremspedal, angekoppelt sein. Als Alternative oder als Ergänzung zu einem Bremspedal kann auch ein anders ausgebildetes Bremseingabeelement 22 verwendbar sein. Mittels des Bremseingabeelements 22 kann ein Fahrer eines Fahrzeugs mit dem Bremssystem eine Druckerhöhung in einem Innenvolumen des Hauptbremszylinders 18 bewirken. Bevorzugter Weise ist ein Bremskraftverstärker 24 an dem Hauptbremszylinder derart angekoppelt, dass die von dem Fahrer bewirkte Druckerhöhung in dem Innenvolumen des Hauptbremszylinders 18 mittels des Bremskraftverstärkers 24 steigerbar ist. Der Bremskraftverstärker 24 kann beispielsweise ein hydraulischer Bremskraftverstärker und/oder ein elektromechanischer Bremskraftverstärker (i-Booster) sein. Vorzugsweise ist der Bremskraftverstärker 24 ein regelbarer/steuerbarer Bremskraftverstärker.

Als Ergänzung kann auch ein Sensor 26 derart an dem Bremseingabeelement 22 angeordnet sein, dass ein Betätigen des Bremseingabeelements 22 durch den Fahrer mittels des Sensors 26 erfassbar ist. Vorzugsweise ist der Sensor 26 dazu ausgelegt, ein der Betätigung des Bremspedals entsprechendes Bremskraft- und/oder Bremswegsignal an eine (nicht skizzierte) Auswerteelektronik bereitzustellen. Auf eine Verwendungsmöglichkeit für die von dem Sensor 26 bereitgestellten Informationen wird unten genauer eingegangen. Der Sensor 26 kann beispielsweise ein Pedalwegsensor, ein Booster-Membranwegsensor und/oder ein Stangenwegsensor sein. Die Ausführbarkeit des Sensors 26 ist jedoch nicht auf die hier aufgezählten Beispiele beschränkt.

An dem Hauptbremszylinder 18 sind eine erste Zufuhrleitung 28a des ersten Bremskreises 10a und eine zweite Zufuhrleitung 28b des zweiten Bremskreises 10b angekoppelt. Die erste Zufuhrleitung 28a verbindet ein erstes Umschaltventil 30a mit dem Hauptbremszylinder 18. Parallel zu dem ersten Umschaltventil 30a verläuft eine Bypassleitung mit einem Rückschlagventil 32a. Das erste Umschaltventil 30a ist über eine Leitung 34 mit einem ersten Radeinlassventil 36a verbunden. Das parallel zu dem ersten Umschaltventil 30a angeordnete Rückschlagventil 32a ist so ausgerichtet, dass eine Bremsmediumverschiebung durch die Bypassleitung in eine Richtung von der Leitung 34 zu der ersten Zufuhrleitung 28a unterbunden ist. Auch parallel zu dem ersten Radeinlassventil 36a ist eine Bypassleitung mit einem Rückschlagventil 38a ausgebildet. Das Rückschlagventil 38a ist so ausgerichtet, dass eine Bremsmediumverschiebung durch die Bypassleitung von der Leitung 34 zu der an dem ersten Radeinlassventil 36 ebenfalls angekoppelten Leitung 40 unterbunden ist.

Die Leitung 40 verbindet das erste Radeinlassventil 36a mit einem ersten Radbremszylinder 42a, mittels welchem ein erstes hydraulisches Bremsmoment zum Abbremsen des ersten Rads 12a erzeugbar ist. Optional kann über einen Verzweigungspunkt 44 ein Drucksensor 46 an die Leitung 40 gekoppelt sein. Mittels des Drucksensors 46 kann ein Druck im Inneren des ersten Bremskreises 10a ermittelt werden. In dem Verzweigungspunkt 44 kann auch eine Leitung 48 münden, über welche ein erstes Radauslassventil 50a mit dem ersten Radbremszylinder verbunden ist. Von dem ersten Radauslassventil 50a führt eine Leitung 52 zu einer Ansaugseite einer ersten Pumpe 54a. Von einer Förderseite der ersten Pumpe 54a verläuft eine Leitung 56, welche in einen in der Leitung 34 angeordneten Verzweigungspunkt 58 mündet. Der erste Bremskreis 10a weist auch eine erste Speicherkammer 60a auf, welche über eine Leitung 62 mit einem in der Leitung 52 angeordneten Verzweigungspunkt 64 verbunden ist.

Der zweite Bremskreis 10b ist entsprechend dem ersten Bremskreis 10a ausgebildet. Die zweite Zufuhrleitung 28b führt von dem Hauptbremszylinder 18 zu einem zweiten Umschaltventil 30b mit einer parallel dazu ausgerichteten Bypassleitung mit einem Rückschlagventil 32b. Über eine Leitung 66 ist das zweite Umschaltventil 30b mit einem zweiten Radeinlassventil 36b mit einer parallel verlaufenden Bypassleitung, welche ein Rückschlagventil 38b aufweist, verbunden. Zur Ausrichtung der Rückschlagventile 32b und 38b wird auf die Beschreibung des ersten Bremskreises 10a verwiesen. Optional kann über einen Verzweigungspunkt 68 ein weiterer Drucksensor 70 zum Bestimmen eines Drucks in dem zweiten Bremskreis 10b an die zweite Zufuhrleitung 28b angekoppelt sein.

Ein zweiter Radbremszylinder 42b des zweiten Bremskreises 10b ist über eine Leitung 72 mit dem zweiten Radeinlassventil 36b verbunden. Von einem Verzweigungspunkt 74 in der Leitung 72 verläuft eine Leitung 76, welche zu einem zweiten Radauslassventil 50b führt. Das zweite Radauslassventil 50b ist über eine Leitung 78 mit einer Ansaugseite einer zweiten Pumpe 54b verbunden. In die Leitung 78 mündet über einen Verzweigungspunkt 80 auch eine Leitung 82, an deren Ende eine zweite Speicherkammer 60b des zweiten Bremskreises 10b angeordnet ist. Von einer Förderseite der zweiten Pumpe 54b führt eine Leitung 83 zu einem in der Leitung 66 angeordneten Verzweigungspunkt 85.

Der erste Radbremszylinder 42a ist somit derart mit dem Hauptbremszylinder 18 hydraulisch verbunden, dass ein erstes Bremsmediumvolumen aus dem Hauptbremszylinder 18 durch das zumindest teilgeöffnete erste Umschaltventil 30a und das zumindest teilgeöffnete erste Radeinlassventil 36a in den ersten Radbremszylinder 42a verschiebbar ist. Entsprechend ist auch ein zweites Bremsmediumvolumen aus dem Hauptbremszylinder 18 durch das zumindest teilgeöffnete zweite Umschaltventil 30b und das zumindest teilgeöffnete zweite Radeinlassventil 36b in dem zweiten Radbremszylinder 42b verschiebbar. Der Fahrer hat somit die Möglichkeit, durch ein direktes Einbremsen in die Bremskreise 10a und 10b die Räder 12a und 12b abzubremsen.

Der erste Bremskreis 10a und der zweite Bremskreis 10b sind auch an das Bremsmediumreservoir 20 unter Umgehung des Hauptbremszylinders 18 angeschlossen. Erfindungsgemäß verläuft von dem Bremsmediumreservoir 20 eine Saugleitung 84, an welcher über einen Verzweigungspunkt 86 eine Leitung 88 angeschlossen ist, die zu einem Trennventil 90 führt. Das Trennventil 90 ist dem ersten Bremskreis 10a und dem zweiten Bremskreis 10b gemeinsam zugeordnet. Als mögliche Ausführungsform kann eine von dem Trennventil 90 weg verlaufende Leitung 92 sich in eine erste Verbindungsleitung 94a und in eine zweite Verbindungsleitung 94b aufteilen. Die erste Verbindungsleitung 94a mündet in einem Verzweigungspunkt 96 innerhalb der Leitung 62, welche die erste Speicherkammer 60a mit dem ersten Radauslassventil 50a und der ersten Pumpe 54a verbindet. Entsprechend mündet die zweite Verbindungsleitung 94b in einen Verzweigungspunkt 98 innerhalb der Leitung 82, welche die zweite Speicherkammer 60b mit dem zweiten Radauslassventil 50b und der zweiten Pumpe 54 verbindet. In der ersten Verbindungsleitung 94a und der zweiten Verbindungsleitung 94b ist jeweils ein Rückschlagventil 100a und 100b angeordnet. Das in der ersten Verbindungsleitung 94a angeordnete Rückschlagventil 100a ist so ausgerichtet, dass ein Bremsmediumstrom durch die erste Verbindungsleitung 94a in einer Richtung von der Leitung 62 zu der Leitung 92 unterbunden ist. Entsprechend ist durch die Ausrichtung des Rückschlagventils 100b der zweiten Verbindungsleitung 94b ein Bremsmediumstrom durch die zweite Verbindungsleitung 94b in einer Richtung von der Leitung 82 zu der Leitung 92 unterbunden. Jedes der Rückschlagventile 100a und 100b ist somit so ausgerichtet, dass eine Bremsmediumverschiebung von der Speicherkammer 60a oder 60b, den Radauslassventilen 50a oder 50b und den Ansaugseiten 54a oder 54b, bzw. der Bremskreisvolumen zwischen den Komponenten 50a, 54a und 60a oder 50b, 54b und 60b zu dem Trennventil 90 unterbunden ist. Insbesondere ist aufgrund der gegenläufigen Ausrichtung der Rückschlagventile 100a und 100b ein Bremsmediumstrom von dem Teilvolumen des ersten Bremskreises 10a zwischen den Komponenten 50a, 54a und 60a und dem Teilvolumen des zweiten Bremskreises 10b zwischen den Komponenten 50b, 54b und 60b verhindert.

Im Falle eines notwendigen ABS-Regeleingriffs an dem Radbremszylinder 42a oder 42b wird das zugehörige Auslassventil 50a oder 50b geöffnet. Anschließend kann ein Volumen ausschließlich in die zugeordnete Speicherkammer 60a oder 60b des jeweiligen Bremskreises 10a oder 10b fließen. Mittels der Pumpe 54a oder 54b ist dieses Volumen ausschließlich in dem zugeordneten Bremskreis 10a oder 10b zurückverschiebbar. Somit wird auch bei einem ABS-Regeleingriff der Volumenhaushalt des ersten Bremskreises 10a und des zweiten Bremskreises 10b stabil gehalten.

Es wird noch einmal darauf hingewiesen, dass die beiden Rückschlagventile 100a und 100b sicher stellen, dass ein über ein Radauslassventil 50a oder 50b abgeflossenes Bremsmediumvolumen nur in den zugehörigen Bremskreis 10a oder 10b zurückgefördert wird. Dies sichert den Volumenhaushalt eines jeden einzelnen Bremskreises 10a und 10b. Trotzdem besteht die Möglichkeit, im Falle von einem gewünschten aktiven Druckaufbau entkoppelt von oder unter Berücksichtigung einer Betätigung des Bremseingabeelements 22 ein zusätzliches Volumen über das Trennventil 90 aus dem Bremsmediumreservoir 20 individuell in einen der beiden Bremskreise 10a oder 10b oder in beide Bremskreise 10a und 10b gleichzeitig zu fördern.

Das erste Umschaltventil 30a, das zweite Umschaltventil 30b, das erste Radeinlassventil 36a und das zweite Radeinlassventil 36b können als stromlos offene Ventile ausgebildet sein. In diesem Fall ist es vorteilhaft, wenn das erste Radauslassventil 50a und das zweite Radeinlassventil 50b als stromlos geschlossene Ventile ausgelegt sind. Bevorzugter Weise ist das Trennventil 90 als stromlos geschlossenes Ventil ausgebildet. Dies gewährleistet eine verlässliche Abkopplung des ersten Bremskreises 10a und des zweiten Bremskreises 10b von dem Bremsmediumreservoir 20 bei einem Nichtbetrieb (Nichtbestromen) des Trennventils 90.

Nachfolgend wird das Zusammenwirken der einzelnen Komponenten zum Abbremsen des ersten Rads 10a und des zweiten Rads 10b beschrieben:
Über eine Betätigung des Bremseingabeelements 22 kann der Fahrer über eine Druckerhöhung in dem Innenvolumen des Hauptbremszylinders 18 ein direktes Einbremsen in die Bremskreise 10a und 10b zum Abbremsen der Räder 12a und 12b bewirken. Dabei sind ein erstes und ein zweites Bremsmediumvolumen entsprechend der von dem Fahrer und/oder dem Bremskraftverstärker 24 aufgebrachten Kraft in die Radbremszylinder 42a und 42b verschiebbar. Zusätzlich ist mittels der ersten Pumpe 54a ein drittes Bremsmediumvolumen aus dem Bremsmediumreservoir 20 durch das zumindest teilgeöffnete Trennventil 90, das Rückschlagventil 100a und das zumindest teilgeöffnete erste Radeinlassventil 36a in den ersten Radbremszylinder 42a pumpbar. Entsprechend kann mittels eines Betätigens der zweiten Pumpe 54b ein viertes Bremsmediumvolumen aus dem Bremsmediumreservoir 20 durch das zumindest teilgeöffnete Trennventil 90, das Rückschlagventil 100b und das zumindest teilgeöffnete zweite Radeinlassventil 36b in den zweiten Radbremszylinder 42b gepumpt werden. Somit ist auch unabhängig von einer Betätigung des Bremseingabeelements 22 durch den Fahrer oder unter Berücksichtigung der Betätigung des Bremseingabeelements 22 eine Fremdkraftbremsung an den Rädern 12a und 12b ausführbar.

Für die Bremsmediumzufuhr aus dem Bremsmediumreservoir 20 in den ersten Bremskreis 10a und/oder den zweiten Bremskreis 10b, bzw. für eine entsprechende Bremsmediumrückförderung in das Bremsmediumreservoir 20 ist lediglich das Trennventil 90 anzusteuern. Ein weiteres Ventil wird dazu nicht benötigt. Erfindungsgemäß wird das kostengünstige Trennventil 90 dazu verwendet, auf jeweils ein eigenes Hauptschaltventil (Hochdruckventil) des ersten Bremskreises 10a und des zweiten Bremskreises 10b zu verzichten. Die Multifunktionalität des ersten Bremskreises 10a und des zweiten Bremskreises 10b ist somit trotz einer vergleichsweise geringen Gesamtanzahl der mittels eines elektrischen Steuersignals/Schaltsignals zumindest in einen offenen Zustand und in einen geschlossenen Zustand steuerbaren/schaltbaren Ventile 30a, 30b, 36a, 36b, 50a, 50b und 90 gewährleistet.

Trotz der gemeinsamen Ankopplung des ersten Bremskreises 10a und des zweiten Bremskreises 10b an das Bremsmediumreservoir 20 über das Trennventil 90 ist eine unerwünschte Bremsmediumverschiebung zwischen dem ersten Bremskreis 10a und 10b aufgrund der gegenläufigen Ausrichtung der Rückschlagventile 100a und 100b unterbunden. Somit kann mittels der kostengünstigen Rückschlagventile 100a und 100b ein elektrisch steuerbares/schaltbares Ventil eingespart werden.

Für ein schnelles Abbauen des ersten hydraulischen Bremsmoments und/oder des zweiten hydraulischen Bremsmoments kann ein fünftes Bremsmediumvolumen aus dem ersten Radbremszylinder 42a in die erste Speicherkammer 60a und/oder ein sechstes Bremsmediumvolumen aus dem zweiten Radbremszylinder 42b in die zweite Speicherkammer 60b verschoben werden. Somit ist es möglich, eine nicht mehr erwünschte Fahrzeugverzögerung schnell und gezielt abzubauen. Die gegenläufige Ausrichtung der Rückschlagventile 100a und 100b verhindert auch dabei eine unerwünschte Bremsmediumverschiebung zwischen dem ersten Bremskreis 10a und dem zweiten Bremskreis 10b.

Auch der dritte Bremskreis 14 ist über die Saugleitung 84 an das Bremsmediumreservoir 20 angekoppelt. Der dritte Bremskreis 14 weist somit nicht die konventionelle hydraulische Anbindung an den Hauptbremszylinder 18 auf. Somit kann ein Innendruck in einem dem dritten Rad 16a zugeordneten dritten Radbremszylinder 102a und in einem dem vierten Rad 16b zugeordneten vierten Radbremszylinder 102b des dritten Bremskreises 14 entsprechend eines bevorzugten dritten hydraulischen Bremsmoments und eines korrespondierenden vierten hydraulischen Bremsmoments aktiv eingestellt/aufgebaut werden.

Nachfolgend wird die Aufführungsform des dritten Bremskreises 14 beschrieben:
Der dritte Bremskreis 14 weist eine dritte Pumpe 104 und ein stetig verstellbares/regelbares Ventil 106 auf. Das stetig verstellbare Ventil 106 (stetig regelbare Ventil) ist über die Saugleitung 84 mit dem Bremsmediumreservoir 20 verbunden. Von dem Verzweigungspunkt 86 führt eine Leitung 108 zu einem Verzweigungspunkt 110 einer Leitung 112, welche an einer Saugseite der dritten Pumpe 104 mündet. Von einer Förderseite der dritten Pumpe 104 verläuft eine Leitung 114 zu einem vierten Radeinlassventil 116b, welches über eine Leitung 118 mit dem vierten Radbremszylinder 102b verbunden ist. Von einem Verzweigungspunkt 120 in der Leitung 114 verläuft eine weitere Leitung 122 zu einem dritten Radeinlassventil 116a. Das dritte Radeinlassventil 116a ist über eine Leitung 124 mit dem dritten Radbremszylinder 102a verbunden. Parallel zu dem dritten Radeinlassventil 116a und dem vierten Radeinlassventil 116b verläuft jeweils eine Bypassleitung mit einem Rückschlagventil 126a und 126b. Die Rückschlagventile 126a und 126b sind jeweils so ausgerichtet, dass eine Bremsmediumverschiebung von der dritten Pumpe 104 zu dem zugeordneten Radbremszylinder 102a oder 102b über die Bypassleitungen unterbunden ist.

Über einen Verzweigungspunkt 128 in der Leitung 124 und eine Leitung 130 ist ein drittes Radauslassventil 132a mit dem dritten Radbremszylinder 102a verbunden. Ebenso ist ein viertes Radauslassventil 132b über einen Verzweigungspunkt 134 in der Leitung 118 und eine Leitung 136 mit dem vierten Radbremszylinder 102b verbunden. Von dem dritten Radauslassventil 132a und dem vierten Radauslassventil 132b verläuft jeweils eine Leitung 138 und 140, welche in einem Verzweigungspunkt 142 an einem der dritten Pumpe 104 gegenüberliegenden Ende der Leitung 112 münden.

Das stetig verstellbare Ventil 106 kann bezüglich seiner Funktion und seiner Spezifikation mit einem Umschaltventil verglichen werden. Das stetig verstellbare Ventil 106 kann auch als PCR-Ventil (Pressure Control Valve) bezeichnet werden. Mittels des stetig verstellbaren Ventils 106 und der dritten Pumpe 104 ist eine von dem Fahrer unabhängige Druckeinstellung in dem dritten Bremskreis 14 möglich. Durch dieses aktive Aufbauen eines Bremsdrucks ist ein starkes Abbremsen der insbesondere als Hinterräder ausgebildeten Räder 16a und 16b ausführbar, ohne dass das Fahrzeug ins Schleudern kommt.

Vorzugsweise ist das stetig verstellbare Ventil 106 als stromlos geöffnetes Ventil ausgebildet. Dies ermöglicht einen Druckausgleich im dritten Bremskreis bei signifikanten Temperaturänderungen.

Die erste Pumpe 54a und/oder die zweite Pumpe 54b können eine Einkolbenpumpe sein. In diesem Fall ist eine Ausbildung der dritten Pumpe 104 als Dreikolbenpumpe vorteilhaft. Es wird jedoch darauf hingewiesen, dass für die Pumpen 54a, 54b und 104 auch andere Pumpen mit einem oder mehreren Kolben, asymmetrische Pumpen und/oder Zahnradpumpen einsetzbar sind. Vorzugsweise sind die Pumpen 54a, 54b und 104 auf einer gemeinsamen Welle 144 eines Motors 146 angeordnet. Auf diese Weise kann auf einen zusätzlichen Motor zum Betreiben der Pumpen 54a, 54b und 104 verzichtet werden.

Mittels des ersten Radeinlassventils 36a kann nicht nur eine Bremsmediumverschiebung von dem ersten Umschaltventil 30a zu dem ersten Radbremszylinder 42a, sondern auch von einer Förderseite der ersten Pumpe 54a zu dem ersten Radbremszylinder 42a gesteuert werden. (Über die Verwendung des ersten Radauslassventils 50a kann ebenso eine Bremsmediumverschiebung von dem ersten Radbremszylinder 42a zu der Saugseite der ersten Pumpe 54a und/oder von dem ersten Radbremszylinder 42a zu der ersten Speicherkammer 60a gesteuert werden.) Entsprechend sind auch das zweite Radeinlassventil 36b und das zweite Radauslassventil 50b einsetzbar. Somit ist mittels der Ventile 36a, 36b, 50a und 50b ein Fremddruckaufbau in den zugeordneten Radbremszylindern 42a und 42b trotz eines gemeinsamen Betreibens der Pumpen 54a und 54b radindividuell ausführbar.

Entsprechend ist auch trotz eines gemeinsamen Mitbetreibens der dritten Pumpe 104 eine unerwünschte Druckänderung in dem dritten Radbremszylinder 102a und/oder in dem vierten Radbremszylinder 102b mittels der Ventile 106, 116a, 116b, 132a und 132b verhinderbar. Ebenso kann, unter Konstanthaltung des ersten hydraulischen Bremsmoments und/oder des zweiten hydraulischen Bremsmoments, ein drittes hydraulisches Bremsmoment des dritten Radbremszylinders 102a und ein viertes hydraulisches Bremsmoment des vierten Radbremszylinders 102b radindividuell und aktiv eingestellt werden. Dazu wird die dritte Pumpe 104 und das stetig verstellbare Ventil 106 entsprechend des gewünschten dritten hydraulischen Bremsmoments und/oder vierten hydraulischen Bremsmoments angesteuert. Obwohl bei einem Betreiben der dritten Pumpe 104 auch die erste Pumpe 54a und die zweite Pumpe 54b mitbetrieben werden, ist eine unerwünschte Volumenförderung auf dem Bremsmediumreservoir 20 in die Bremskreise 10a und 10b über ein Schließen des Trennventils 90 auf einfache Weise unterbindbar. Somit wird, sofern dies gewünscht wird, trotz des Mitbetreibens der Pumpen 54a und 54b kein zusätzliches hydraulisches Bremsmoment an den Rädern 12a und 12b aufgebaut.

Zum Abbauen des dritten hydraulischen Bremsmoments und/oder des vierten hydraulischen Bremsmoments kann das stetig verstellbare Ventil 106 entsprechend des abnehmenden Bremswunsches geöffnet werden. Dabei strömt ein Volumen über das zumindest geöffnete stetig verstellbare Ventil 106 in das Bremsmediumreservoir 20 zurück.

Nachfolgend wird auf eine vorteilhafte Anwendungsmöglichkeit des Bremssystems zum Verblenden eines rekuperativen Bremsmoments eines an eine Achse der Räder 16a und 16b angekoppelten Generators beschrieben:
Beispielsweise wirkt bei einem rekuperativen Bremsen ein bekanntes, aber nicht konstantes Generator-Bremsmoment auf die gemeinsame Achse der Räder 16a und 16b. Zusätzlich kann mittels des Sensors 28 der Bremswunsch des Fahrers ermittelt und eine entsprechende Information bezüglich eines bevorzugten Gesamt-Bremsmoments an eine (nicht dargestellte) Auswerteeinrichtung/Steuervorrichtung des Bremssystems bereitgestellt werden. Unter Berücksichtigung des bevorzugten Gesamt-Bremsmoments, des Generator-Bremsmoments und optional des ersten hydraulischen Bremsmoments und/oder des zweiten hydraulischen Bremsmoments kann anschließend ein Soll-Zusatzbremsmoment festgelegt werden, welches mittels des dritten Radbremszylinders 102a und des vierten Radbremszylinders 102b für ein verlässliches Einhalten des Gesamt-Bremsmoments einstellbar ist. Anschließend wird das festgelegte Soll-Zusatzbremsmoment als Summe des dritten hydraulischen Bremsmoments und des vierten hydraulischen Bremsmoments mittels der Radbremszylinder 102a und 102b eingestellt. Beispielsweise kann die Einstellung des dritten hydraulischen Bremsmoments und/oder des vierten hydraulischen Bremsmoments durch eine Druckstellung mittels Δ-P-Ansteuerung des stetig verstellbaren Ventils 106 erfolgen. Als Alternative dazu ist auch eine Druckregelung möglich. Dazu kann optional ein Drucksensor 148 an dem Verzweigungspunkt 120 angekoppelt sein.

Das in dem oberen Absatz beschriebene Verblenden führt zur verlässlichen Einhaltung einer vom Fahrer vorgegebenen Fahrzeugverzögerung. Dieser Verblendungsvorgang ist für den Fahrer nicht wahrnehmbar.

Erfindungsgemäß umfasst das Bremssystem eine (nicht skizzierte) Steuervorrichtung, welche zusätzlich dazu ausgelegt ist, eine von einer fahrzeugeigenen Komponente bereitgestellte Fremdkraftbremsvorgabe zu empfangen, und nach einem Empfangen der Fremdkraftbremsvorgabe das Trennventil 90 in einen zumindest teilgeöffneten Zustand zu steuern und die erste Pumpe 54a und/oder die zweite Pumpe 54b unter Berücksichtigung der Fremdkraftbremsvorgabe derart anzusteuern, dass zusätzliches Bremsmediumvolumen aus dem Bremsmediumreservoir 20 über das zumindest teilgeöffnete Trennventil 90 in den ersten Radbremszylinder 42a und/oder ein weiteres Bremsmediumvolumen aus dem Bremsmediumreservoir 20 über das zumindest teilgeöffnete Trennventil 90 in den zweiten Radbremszylinder 42b pumpbar sind. Die Fremdkraftbremsvorgabe kann insbesondere von einer als automatische Geschwindigkeitssteuervorrichtung und/oder einer als Unfall-Schutzvorrichtung, beispielsweise einer Airbag-Vorrichtung und/oder einer Gurtstraff-Vorrichtung, ausgebildeten Komponente bereitgestellt werden. Somit kann in bestimmten Situationen ein vorteilhaftes starkes Abbremsen der Räder 12a und 12b, insbesondere zusammen mit den Rädern 16a und 16b, erreicht werden.

Das in den oberen Absätzen beschriebene Bremssystem gewährleistet auch nach einem Ausfall eines seiner Bremskreise 10a, 10b oder 14 ein verlässliches Abbremsen des zugehörigen Fahrzeugs an mindestens drei Rädern 12a, 12b, 16a oder 16b:
Bei einer Funktionsbeeinträchtigung des ersten Bremskreises 10a oder des zweiten Bremskreises 10b kann mittels eines Betreibens der Pumpen 54a, 54b und 104 ein Druck in den noch funktionsausführenden Radbremszylindern 42a, 42b, 102a oder 102b so gesteigert werden, dass die Summe der realisierten hydraulischen Bremsmomente die Funktionsbeeinträchtigung kompensiert.

Im Falle einer Funktionsbeeinträchtigung des dritten Bremskreises 14, beispielsweise aufgrund eines elektrischen Fehlers einer zugeordneten Steuer-, Übertragungs- und/oder Energieversorgungseinrichtung, kann der Fahrer noch immer direkt in den ersten Bremskreis 10a und in den zweiten Bremskreis 10b hineinbremsen. Bevorzugter Weise wird in einer derartigen Situation mittels einer Verwendung des Bremskraftverstärkers ein zusätzlicher Druck in dem Hauptbremszylinder 18 aufgebaut. Dies bewirkt eine Steuerung des ersten hydraulischen Bremsmoments und des zweiten hydraulischen Bremsmoments. Insbesondere kann durch eine derartige Verwendung des Bremskraftverstärkers 24 die Funktionsbeeinträchtigung des dritten Bremskreises 14 gezielt kompensiert werden.

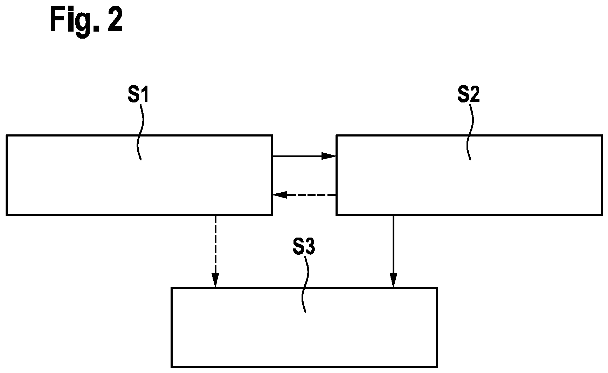

Fig. 2 zeigt ein Flussdiagramm einer Ausführungsform des Verfahrens.

Das Verfahren ist mit einem Bremssystem ausführbar, welches mit einem Hauptbremszylinder, einem Bremsmediumreservoir, einem ersten Radbremszylinder, welcher mit dem Hauptbremszylinder hydraulisch verbunden ist, einem zweiten Radbremszylinder, welcher mit dem Hauptbremszylinder hydraulisch verbunden ist, einem an das Bremsmediumreservoir gekoppelten Trennventil, einer über ein erstes Rückschlagventil mit dem Trennventil hydraulisch verbundenen ersten Pumpe und einer über ein zweites Rückschlagventil mit dem Trennventil hydraulisch verbundenen zweiten Pumpe, ausgestattet ist. Zum Ausführen des Verfahrens kann beispielsweise das Bremssystem der Fig. 1 verwendet werden. Die Ausführbarkeit des Verfahrens ist jedoch nicht auf dieses Bremssystem beschränkt.

In einem Verfahrensschritt S1 wird eine von einer fahrzeugeigenen Komponente bereitgestellten Fremdkraftbremsvorgabe empfangen. Beispiele für die dazu verwendbare Komponente sind oben bereits aufgezählt.

Das Trennventil wird in einem Verfahrensschritt S2 in einen zumindest teilgeöffneten Zustand gesteuert. Der Verfahrensschritt S2 kann jedoch schon vor dem Verfahrensschritt S1 ausgeführt werden. Die Nummerierung der Verfahrensschritte S1 und S2 legt keine einzuhaltende Reihenfolge des zeitlichen Ablaufs des Verfahrens fest.

In einem Verfahrensschritt S3 werden die erste Pumpe und/oder die zweite Pump so betrieben, dass ein erstes Bremsmediumvolumen aus dem Bremsmediumreservoir über das zumindest teilgeöffnete Trennventil in den ersten Radbremszylinder und/oder ein zweites Bremsmediumvolumen aus dem Bremsmediumreservoir über das zumindest teilgeöffnete Trennventil in den zweiten Radbremszylinder gepumpt werden. Das Betreiben der ersten Pumpe und/oder der zweiten Pumpe erfolgt unter Berücksichtigung der empfangenen Fremdkraftbremsvorgabe. Somit ist die empfangene Fremdkraftbremsvorgabe unter Verwendung kostengünstiger Komponenten und mit einem vergleichsweise geringen Aufwand ausführbar. Insbesondere kann auf diese Weise das Fahrzeug vor einem möglichen Unfall schnell abgebremst werden und/oder mittels eines automatischen Geschwindigkeitssteuersystems betrieben werden.

## Patentansprüche

1. Bremssystem für ein Fahrzeug mit
einem Hauptbremszylinder (18);
einem Bremsmediumreservoir (20);
einem genau einem Rad (12a) zugeordneten ersten Bremskreis (10a) mit einem ersten Radbremszylinder (42a), welcher mit dem Hauptbremszylinder (18) über ein zwischen dem Hauptbremszylinder (18) und dem ersten Radbremszylinder (42a) angeordnetes erstes Umschaltventil (30a) hydraulisch derart verbunden ist, dass ein erstes Bremsmediumvolumen aus dem Hauptbremszylinder (18) durch das zumindest teilgeöffnete erste Umschaltventil (30a) in den ersten Radbremszylinder (42a) verschiebbar ist, und einer dem ersten Radbremszylinder (42a) zugeordneten ersten Pumpe (54a), wobei mittels eines ersten Radeinlassventils (36a) des ersten Bremskreises (10a) eine Bremsmediumverschiebung von dem ersten Umschaltventil (30a) zu dem ersten Radbremszylinder (42a) und/oder von einer Förderseite der ersten Pumpe (54a) zu dem ersten Radbremszylinder (42a) steuerbar ist und mittels eines ersten Radauslassventils (50a) des ersten Bremskreises (10a) eine Bremsmediumverschiebung von dem ersten Radbremszylinder (42a) zu einer Saugseite der ersten Pumpe (54a) steuerbar ist;
einem genau einem Rad (12b) zugeordneten zweiten Bremskreis (10b) mit einem zweiten Radbremszylinder (42b), welcher mit dem Hauptbremszylinder (18) über ein zwischen dem Hauptbremszylinder (18) und dem zweiten Radbremszylinder (42b) angeordnetes zweites Umschaltventil (30b) hydraulisch derart verbunden ist, dass ein zweites Bremsmediumvolumen aus dem Hauptbremszylinder (18) durch das zumindest teilgeöffnete zweite Umschaltventil (30b) in den zweiten Radbremszylinder (42b) verschiebbar ist, und einer dem zweiten Radbremszylinder (42b) zugeordneten zweiten Pumpe (54b), wobei mittels eines zweiten Radeinlassventils (36b) des zweiten Bremskreises (10b) eine Bremsmediumverschiebung von dem zweiten Umschaltventil (30b) zu dem zweiten Radbremszylinder (42b) und/oder von einer Förderseite der zweiten
Pumpe (54b) zu dem zweiten Radbremszylinder (42b) steuerbar ist und mittels eines zweiten Radauslassventils (50b) des zweiten Bremskreises (10b) eine Bremsmediumverschiebung von dem zweiten Radbremszylinder (42b) zu einer Saugseite der zweiten Pumpe (54b) steuerbar ist; und
einem von dem Hauptbremszylinder (18) abgekoppelten und genau zwei Rädern (16a und 16b) zugeordneten dritten Bremskreis (14) mit
- einer an das Bremsmediumreservoir (20) angekoppelten dritten Pumpe (104);
- einem dritten Radbremszylinder (102a) und einem vierten Radbremszylinder (102b), welche mit der dritten Pumpe (104) hydraulisch derart verbunden sind, dass ein drittes Bremsmediumvolumen mittels der dritten Pumpe (104) aus dem Bremsmediumreservoir (20) über ein drittes Radeinlassventil (116a) in den dritten Radbremszylinder (102a) pumpbar ist und ein viertes Bremsmediumvolumen mittels der dritten Pumpe (104) aus dem Bremsmediumreservoir (20) über ein viertes Radeinlassventil (116b) in den vierten Radbremszylinder (102b) pumpbar ist; und
- einem stetig verstellbaren Ventil (106), über welches die dritte Pumpe (104) mit dem Bremsmediumreservoir (20) hydraulisch derart verbunden ist, dass eine Bremsmediumverschiebung von der dritten Pumpe (104) in das Bremsmediumreservoir (20) mittels des stetig verstellbaren Ventils (106) steuerbar ist;
- wobei ein fünftes Bremsmediumvolumen durch ein drittes Radauslassventil (132) aus dem dritten Radbremszylinder (102a) in das Bremsmediumreservoir (20) verschiebbar ist und ein sechstes Bremsmediumvolumen durch ein viertes Radauslassventil aus dem vierten Radbremszylinder (102b) in das Bremsmediumreservoir (20) verschiebbar ist;
**gekennzeichnet durch**
ein an das Bremsmediumreservoir (20) angebundenes Trennventil (90);
wobei die erste Pumpe (54a) über ein erstes Rückschlagventil (100a) hydraulisch derart mit dem Trennventil (90) verbunden ist, dass mittels der ersten Pumpe (54a) ein siebtes Bremsmediumvolumen durch das zumindest teilgeöffnete Trennventil (90) und das erste Rückschlagventil (100a) in den ersten Radbremszylinder (42a) pumpbar ist; und
wobei die zweite Pumpe (54b) über ein zweites Rückschlagventil (100b) hydraulisch derart mit dem Trennventil (90) verbunden ist, dass mittels der zweiten Pumpe (54b) ein achtes Bremsmediumvolumen durch das zumindest teilgeöffnete Trennventil (90) und das zweite Rückschlagventil (100b) in den zweiten Radbremszylinder (42b) pumpbar ist;
und wobei das Bremssystem genau zwölf ansteuerbare Ventile (30a, 30b, 36a, 36b, 50a, 50b, 90, 106, 116a, 116b, 132a, 132b) umfassend das erste und zweite Umschaltventil (30a, 30b), das erste bis vierte Radeinlassventil (36a, 36b, 116a, 116b), das erste bis vierte Radauslassventil (50a, 50b, 132a, 132b), das stetig verstellbare Ventil (106) und das Trennventil (90) aufweist, welche mittels eines von einer Steuervorrichtung des Bremssystems bereitgestellten elektrischen Signals zumindest in einen geöffneten Zustand und in einen geschlossenen Zustand steuerbar sind.

2. Bremssystem nach Anspruch 1, wobei das erste Rückschlagventil (100a) derart ausgerichtet ist, dass eine Bremsmediumverschiebung von der ersten Pumpe (54a) zu dem Trennventil (90) durch das erste Rückschlagventil (100a) unterbunden ist, und/oder das zweite Rückschlagventil (100b) derart ausgerichtet ist, dass eine Bremsmediumverschiebung von der zweiten Pumpe (54b) zu dem Trennventil (90) durch das zweite Rückschlagventil (100b) unterbunden ist.

3. Bremssystem nach Anspruch 1 oder 2, wobei eine erste Speicherkammer (60a) des Bremssystems mit dem ersten Radbremszylinder (42a) hydraulisch derart verbunden ist, dass ein neuntes Bremsmediumvolumen aus dem ersten Radbremszylinder (42a) in die erste Speicherkammer (60a) verschiebbar ist und/oder eine zweite Speicherkammer (60b) des Bremssystems mit dem zweiten Radbremszylinder (42b) hydraulisch derart verbunden ist, dass ein zehntes Bremsmediumvolumen aus dem zweiten Radbremszylinder (42b) in die zweite Speicherkammer (60b) verschiebbar ist.

4. Bremssystem nach Anspruch 3, wobei mittels des ersten Radauslassventils (50a) des Bremssystems eine Bremsmediumverschiebung von dem ersten Radbremszylinder (42a) zu der ersten Speicherkammer (60a) steuerbar ist.

5. Bremssystem nach einem der vorhergehenden Ansprüche, wobei das Bremssystem einen Generator umfasst, mittels welchem ein Generator-Bremsmoment zumindest auf ein dem dritten Radbremszylinder (102a, 102b) zugeordnetes Rad ausübbar ist.

6. Bremssystem nach einem der vorhergehenden Ansprüche, wobei die erste Pumpe (54a), die zweite Pumpe (54b) und die dritte Pumpe (104) auf einer gemeinsamen Welle (144) eines Motors (146) angeordnet sind.

7. Bremssystem nach einem der vorhergehenden Ansprüche, wobei das Bremssystem mit dem ersten Radbremszylinder (42a), dem zweiten Radbremszylinder (42b), dem dritten Radbremszylinder (102a) und dem vierten Radbremszylinder (102b) genau vier Radbremszylinder (42a, 42b, 102a, 102b) aufweist.

8. Bremssystem nach einem der vorhergehenden Ansprüche, wobei die Steuervorrichtung des Bremssystems dazu auslegt ist, eine von einer fahrzeugeigenen Komponente bereitgestellte Fremdkraftbremsvorgabe zu empfangen, und nach einem Empfangen der Fremdkraftbremsvorgabe das Trennventil (90) in einen zumindest teilgeöffneten Zustand zu steuern und die erste Pumpe (54a) und/oder die zweite Pumpe (54b) unter Berücksichtigung der Fremdkraftbremsvorgabe derart anzusteuern, dass das siebte Bremsmediumvolumen aus dem Bremsmediumreservoir (20) über das zumindest teilgeöffnete Trennventil (90) in den ersten Radbremszylinder (42a) und/oder das achte Bremsmediumvolumen aus dem Bremsmediumreservoir (20) über das zumindest teilgeöffnete Trennventil (90) in den zweiten Radbremszylinder (42b) pumpbar sind.

9. Fahrzeug mit einem Bremssystem nach einem der vorhergehenden Ansprüche.

10. Verfahren zum Betreiben eines Bremssystems eines Fahrzeugs mit einem Hauptbremszylinder (18), einem Bremsmediumreservoir (20), einem genau einem Rad (12a) zugeordneten ersten Bremskreis (10a) mit einer ersten Pumpe (54a) und einem ersten Radbremszylinder (42a), welcher über ein erstes Umschaltventil (30a) und ein erstes Radeinlassventil (36a) mit dem Hauptbremszylinder (18) und über ein erstes Radauslassventil (50a) mit einer Saugseite der ersten Pumpe (54a) hydraulisch verbunden ist, einem genau einem Rad (12b) zugeordneten zweiten Bremskreis (10b) mit einer zweiten Pumpe (54b) und einem zweiten Radbremszylinder (42b), welcher über ein zweites Umschaltventil (30b) und ein zweites Radeinlassventil (36b) mit dem Hauptbremszylinder (18) und über ein zweites Radauslassventil (50b) mit einer Saugseite der zweiten Pumpe (54b) hydraulisch verbunden ist, einem von dem Hauptbremszylinder (18) abgekoppelten und genau zwei Rädern (16a und 16b) zugeordneten dritten Bremskreis (14) mit einer an das Bremsmediumreservoir (20) angekoppelten dritten Pumpe (104), einem mit der dritten Pumpe (104) über ein drittes Radeinlassventil (116a) hydraulisch verbundenen dritten Radbremszylinder (102a), einem mit der dritten Pumpe (104) über ein viertes Radeinlassventil (116b) hydraulisch verbundenen vierten Radbremszylinder (102b), und einem an das Bremsmediumreservoir (20) gekoppelten Trennventil (90), wobei die erste Pumpe (54a) über ein erstes Rückschlagventil (100a) mit dem Trennventil (90) und die zweite Pumpe (54b) über ein zweites Rückschlagventil (100b) mit dem Trennventil (90) hydraulisch verbunden sind, wobei der dritte Radbremszylinder (102a) über ein drittes Radauslassventil (132a), der vierte Radbremszylinder (102b) über ein viertes Radauslassventil (132b) und die dritte Pumpe (104) über ein stetig verstellbares Ventil (106) mit dem Bremsmediumreservoir (20) hydraulisch verbunden sind, und wobei das Bremssystem genau zwölf ansteuerbare Ventile (30a, 30b, 36a, 36b, 50a, 50b, 90, 106, 116a, 116b, 132a, 132b) umfassend das erste und zweite Umschaltventil (30a, 30b), das erste bis vierte Radeinlassventil (36a, 36b, 116a, 116b), das erste bis vierte Radauslassventil (50a, 50b, 132a, 132b), das stetig verstellbare Ventil (106) und das Trennventil (90) aufweist, welche mittels eines von einer Steuervorrichtung des Bremssystems bereitgestellten elektrischen Signals zumindest in einen geöffneten Zustand und in einen geschlossenen Zustand steuerbar sind, mit den Schritten:
Empfangen einer von einer fahrzeugeigenen Komponente bereitgestellten Fremdkraftbremsvorgabe (S1);
Steuern des Trennventils (90) in einen zumindest teilgeöffneten Zustand (S2); und
Betreiben der ersten Pumpe (54a) und/oder der zweiten Pumpe (54b) unter Berücksichtigung der empfangenen Fremdkraftbremsvorgabe so, dass ein erstes Bremsmediumvolumen aus dem Bremsmediumreservoir (20) über das zumindest teilgeöffnete Trennventil (90) in den ersten Radbremszylinder (42a) und/oder ein zweites Bremsmediumvolumen aus dem Bremsmediumreservoir (20) über das zumindest teilgeöffnete Trennventil (90) in den zweiten Radbremszylinder (42b) gepumpt werden (S3).

## Claims

1. Brake system for a vehicle, having
a master brake cylinder (18);
a brake medium reservoir (20);
a first brake circuit (10a) assigned to exactly one wheel (12a) and having a first wheel brake cylinder (42a) which is hydraulically connected to the master brake cylinder (18), via a first switching valve (30a) arranged between the master brake cylinder (18) and the first wheel brake cylinder (42a), in such a way that a first brake medium volume can be displaced out of the master brake cylinder (18) through the at least partially opened first switching valve (30a) into the first wheel brake cylinder (42a), and having a first pump (54a) which is assigned to the first wheel brake cylinder (42a), wherein, by means of a first wheel inlet valve (36a) of the first brake circuit (10a), a displacement of brake medium from the first switching valve (30a) to the first wheel brake cylinder (42a) and/or from a delivery side of the first pump (54a) to the first wheel brake cylinder (42a) can be controlled, and, by means of a first wheel outlet valve (50a) of the first brake circuit (10a), a displacement of brake medium from the first wheel brake cylinder (42a) to a suction side of the first pump (54a) can be controlled;
a second brake circuit (10b) assigned to exactly one wheel (12b) and having a second wheel brake cylinder (42b) which is hydraulically connected to the master brake cylinder (18), via a second switching valve (30b) arranged between the master brake cylinder (18) and the second wheel brake cylinder (42b), in such a way that a second brake medium volume can be displaced out of the master brake cylinder (18) through the at least partially opened second switching valve (30b) into the second wheel brake cylinder (42b), and having a second pump (54b) which is assigned to the second wheel brake cylinder (42b), wherein, by means of a second wheel inlet valve (36b) of the second brake circuit (10b), a displacement of brake medium from the second switching valve (30b) to the second wheel brake cylinder (42b) and/or from a delivery side of the second pump (54b) to the second wheel brake cylinder (42b) can be controlled, and, by means of a second wheel outlet valve (50b) of the second brake circuit (10b), a displacement of brake medium from the second wheel brake cylinder (42b) to a suction side of the second pump (54b) can be controlled; and
a third brake circuit (14) decoupled from the master brake cylinder (18) and assigned to exactly two wheels (16a and 16b) and having
- a third pump (104) coupled to the brake medium reservoir (20);
- a third wheel brake cylinder (102a) and a fourth wheel brake cylinder (102b) which are hydraulically connected to the third pump (104) in such a way that a third brake medium volume can be pumped by means of the third pump (104) from the brake medium reservoir (20) via a third wheel inlet valve (116a) into the third wheel brake cylinder (102a) and a fourth brake medium volume can be pumped by means of the third pump (104) from the brake medium reservoir (20) via a fourth wheel inlet valve (116b) into the fourth wheel brake cylinder (102b); and
- a continuously adjustable valve (106) via which the third pump (104) is hydraulically connected to the brake medium reservoir (20) such that a displacement of brake medium from the third pump (104) into the brake medium reservoir (20) can be controlled by means of the continuously adjustable valve (106);
- wherein a fifth brake medium volume can be displaced through a third wheel outlet valve (132) from the third wheel brake cylinder (102a) into the brake medium reservoir (20) and a sixth brake medium volume can be displaced through a fourth wheel outlet valve from the fourth wheel brake cylinder (102b) into the brake medium reservoir (20);
**characterized by**
an isolating valve (90) connected to the brake medium reservoir (20);
wherein the first pump (54a) is hydraulically connected to the isolating valve (90), by means of a first check valve (100a), such that a seventh brake medium volume can be pumped by means of the first pump (54a) through the at least partially opened isolating valve (90) and the first check valve (100a) into the first wheel brake cylinder (42a); and
wherein the second pump (54b) is hydraulically connected to the isolating valve (90), by means of a second check valve (100b), such that an eighth brake medium volume can be pumped by means of the second pump (54b) through the at least partially opened isolating valve (90) and the second check valve (100b) into the second wheel brake cylinder (42b);
and wherein the brake system has exactly twelve actuable valves (30a, 30b, 36a, 36b, 50a, 50b, 90, 106, 116a, 116b, 132a, 132b) comprising the first and second switching valve (30a, 30b), the first to fourth wheel inlet valve (36a, 36b, 116a, 116b), the first to fourth wheel outlet valve (50a, 50b, 132a, 132b), the continuously adjustable valve (106) and the isolating valve (90), which can be controlled at least into an open state and into a closed state by means of an electrical signal provided by a control device of the brake system.

2. Brake system according to Claim 1, wherein the first check valve (100a) is oriented such that a displacement of brake medium from the first pump (54a) to the isolating valve (90) is prevented by the first check valve (100a), and/or the second check valve (100b) is oriented such that a displacement of brake medium from the second pump (54b) to the isolating valve (90) is prevented by the second check valve (100b).

3. Brake system according to Claim 1 or 2, wherein a first accumulator chamber (60a) of the brake system is hydraulically connected to the first wheel brake cylinder (42a) such that a ninth brake medium volume can be displaced from the first wheel brake cylinder (42a) into the first accumulator chamber (60a), and/or a second accumulator chamber (60b) of the brake system is hydraulically connected to the second wheel brake cylinder (42b) such that a tenth brake medium volume can be displaced from the second wheel brake cylinder (42b) into the second accumulator chamber (60b).

4. Brake system according to Claim 3, wherein a displacement of brake medium from the first wheel brake cylinder (42a) to the first accumulator chamber (60a) can be controlled by means of the first wheel outlet valve (50a) of the brake system.

5. Brake system according to one of the preceding claims, wherein the brake system comprises a generator by means of which a generator braking torque can be imparted at least to a wheel assigned to the third wheel brake cylinder (102a, 102b).

6. Brake system according to one of the preceding claims, wherein the first pump (54a), the second pump (54b) and the third pump (104) are arranged on a common shaft (144) of a motor (146).

7. Brake system according to one of the preceding claims, wherein the brake system has, with the first wheel brake cylinder (42a), the second wheel brake cylinder (42b), the third wheel brake cylinder (102a) and the fourth wheel brake cylinder (102b), exactly four wheel brake cylinders (42a, 42b, 102a, 102b).

8. Brake system according to one of the preceding claims, wherein the control device of the brake system is designed to receive a power-assisted braking specification provided by a vehicle-internal component, and, after receiving the power-assisted braking specification, to control the isolating valve (90) into an at least partially open state, and to actuate the first pump (54a) and/or the second pump (54b) taking into consideration the power-assisted braking specification such that the seventh brake medium volume can be pumped from the brake medium reservoir (20) via the at least partially opened isolating valve (90) into the first wheel brake cylinder (42a) and/or the eighth brake medium volume can be pumped from the brake medium reservoir (20) via the at least partially opened isolating valve (90) into the second wheel brake cylinder (42b).

9. Vehicle having a brake system according to one of the preceding claims.

10. Method for operating a brake system of a vehicle having a master brake cylinder (18), having a brake medium reservoir (20), having a first brake circuit (10a) assigned to exactly one wheel (12a) and with a first pump (54a) and a first wheel brake cylinder (42a) which is hydraulically connected via a first switching valve (30a) and a first wheel inlet valve (36a) to the master brake cylinder (18) and via a first wheel outlet valve (50a) to a suction side of the first pump (54a), having a second brake circuit (10b) assigned to exactly one wheel (12b) and with a second pump (54b) and a second wheel brake cylinder (42b) which is hydraulically connected via a second switching valve (30b) and a second wheel inlet valve (36b) to the master brake cylinder (18) and via a second wheel outlet valve (50b) to a suction side of the second pump (54b), having a third brake circuit (14) decoupled from the master brake cylinder (18) and assigned to exactly two wheels (16a and 16b) and with a third pump (104) coupled to the brake medium reservoir (20), with a third wheel brake cylinder (102a) hydraulically connected to the third pump (104) via a third wheel inlet valve (116a), and with a fourth wheel brake cylinder (102b) hydraulically connected to the third pump (104) via a fourth wheel inlet valve (116b), and having an isolating valve (90) coupled to the brake medium reservoir (20), wherein the first pump (54a) is hydraulically connected to the isolating valve (90) via a first check valve (100a) and the second pump (54b) is hydraulically connected to the isolating valve (90) via a second check valve (100b), wherein the third wheel brake cylinder (102a) is hydraulically connected via a third wheel outlet valve (132a), the fourth wheel brake cylinder (102b) is hydraulically connected via a fourth wheel outlet valve (132b) and the third pump (104) is hydraulically connected via a continuously adjustable valve (106), to the brake medium reservoir (20), and wherein the brake system has exactly twelve actuable valves (30a, 30b, 36a, 36b, 50a, 50b, 90, 106, 116a, 116b, 132a, 132b) comprising the first and second switching valve (30a, 30b), the first to fourth wheel inlet valve (36a, 36b, 116a, 116b), the first to fourth wheel outlet valve (50a, 50b, 132a, 132b), the continuously adjustable valve (106) and the isolating valve (90), which can be controlled at least into an open state and into a closed state by means of an electrical signal provided by a control device of the brake system, having the steps:
receiving a power-assisted braking specification provided by a vehicle-internal component (S1),
controlling the isolating valve (90) into an at least partially open state (S2), and
operating the first pump (54a) and/or the second pump (54b) taking into consideration the received power-assisted braking specification such that a first brake medium volume is pumped from the brake medium reservoir (20) via the at least partially opened isolating valve (90) into the first wheel brake cylinder (42a) and/or a second brake medium volume is pumped from the brake medium reservoir (20) via the at least partially opened isolating valve (90) into the second wheel brake cylinder (42b) (S3).

## Revendications

1. Système de freinage pour un véhicule avec :
un maître-cylindre de frein (18) ;
un réservoir de liquide de frein (20) ;
un premier circuit de frein (10a) associé à exactement une roue (12a) avec un premier cylindre de frein de roue (42a) relié de telle sorte de façon hydraulique au maître-cylindre de frein (18) via une première soupape d'inversion (30a) disposée entre le maître-cylindre de frein (18) et le premier cylindre de frein de roue (42a) qu'un premier volume de liquide de frein provenant du maître-cylindre de frein (18) puisse être déplacé à travers la première soupape d'inversion (30a) au moins en partie ouverte jusque dans le premier cylindre de frein de roue (42a) et avec une première pompe (54a) associée au premier cylindre de frein de roue (42a), un déplacement de liquide de frein de la première soupape d'inversion (30a) au premier cylindre de frein de roue (42a) et/ou d'un côté d'extraction de la première pompe (54a) au premier cylindre de frein de roue (42a) pouvant être commandé à l'aide d'une première soupape d'admission de roue (36a) du premier circuit de frein (10a) et un déplacement de liquide de frein du premier cylindre de frein de roue (42a) à un côté d'aspiration de la première pompe (54a) pouvant être commandé à l'aide d'une première soupape d'échappement de roue (50a) du premier circuit de frein (10a) ;
un deuxième circuit de frein (10b) associé à exactement une roue (12b) avec un deuxième cylindre de frein de roue (42b) relié de telle sorte de façon hydraulique au maître-cylindre de frein (18) via une deuxième soupape d'inversion (30b) disposée entre le maître-cylindre de frein (18) et le deuxième cylindre de frein de roue (42b) qu'un deuxième volume de liquide de frein provenant du maître-cylindre de frein (18) puisse être déplacé à travers la deuxième soupape d'inversion (30b) au moins en partie ouverte jusque dans le deuxième cylindre de frein de roue (42b) avec une deuxième pompe (54b) associée au deuxième cylindre de frein de roue (42b), un déplacement de liquide de frein de la deuxième soupape d'inversion (30b) jusqu'au deuxième cylindre de frein de roue (42b) et/ou d'un côté d'extraction de la deuxième pompe (54b) jusqu'au deuxième cylindre de frein de roue (42b) pouvant être commandé à l'aide d'une deuxième soupape d'admission de roue (36b) du deuxième circuit de frein (10b) et un déplacement de liquide de frein du deuxième cylindre de frein de roue (42b) jusqu'à un côté d'aspiration de la deuxième pompe (54b) pouvant être commandé à l'aide d'une deuxième soupape d'échappement de roue (50b) du deuxième circuit de frein (10b) ; et
un troisième circuit de frein (14) découplé du maître-cylindre de frein (18) et associé à exactement deux roues (16a et 16b) avec :
- une troisième pompe (104) couplée au réservoir de liquide de frein (20) ;
- un troisième cylindre de frein de roue (102a) et un quatrième cylindre de frein de roue (102b) reliés de telle sorte de façon hydraulique à la troisième pompe (104) qu'un troisième volume de liquide de frein puisse être pompé à l'aide de la troisième pompe (104) hors du réservoir de liquide de frein (20) jusque dans le troisième cylindre de frein de roue (102a), via une troisième soupape d'admission de roue (116a) et qu'un quatrième volume de liquide de frein puisse être pompé à l'aide de la troisième pompe (104) hors du réservoir de liquide de frein (20) jusque dans le quatrième cylindre de frein de roue (102b), via une quatrième soupape d'admission de roue (116b) ; et
- une soupape (106) mobile en permanence via laquelle la troisième pompe (104) est reliée de telle sorte de façon hydraulique au réservoir de liquide de frein (20) qu'un déplacement de liquide de frein de la troisième pompe (104) jusque dans le réservoir de liquide de frein (20) puisse être commandé à l'aide de la soupape (106) mobile en permanence ;
- un cinquième volume de liquide de frein pouvant être déplacé par une troisième soupape d'échappement de roue (132) hors du troisième cylindre de frein de roue (102a) jusque dans le réservoir de liquide de frein (20) et un sixième volume de liquide de frein pouvant être déplacé par une quatrième soupape d'échappement de roue hors du quatrième cylindre de frein de roue (102b) jusque dans le réservoir de liquide de frein (20) ;
**caractérisé par** :
une soupape de séparation (90) raccordée au réservoir de liquide de frein (20) ;
la première pompe (54a) étant reliée de telle sorte de façon hydraulique à la soupape de séparation (90), via la première soupape de retenue (100a), qu'un septième volume de liquide de frein puisse être pompé par la soupape de séparation (90) au moins en partie ouverte et la première soupape de retenue (100a) jusque dans le premier cylindre de frein de roue (42a) à l'aide de la première pompe (54a) ; et
la deuxième pompe (54b) étant reliée de telle sorte de façon hydraulique à la soupape de séparation (90) via une deuxième soupape de retenue (100b) qu'un huitième volume de liquide de frein puisse être pompé par la soupape de séparation (90) au moins en partie ouverte et la deuxième soupape de retenue (100b) dans le deuxième cylindre de frein de roue (42b) à l'aide de la deuxième pompe (54b) ; et
le système de freinage comportant exactement douze soupapes (30a, 30b, 36a, 36b, 50a, 50b, 90, 106, 116a, 116b, 132a, 132b) commandables comprenant les première et deuxième soupapes d'inversion (30a, 30b), les première à quatrième soupapes d'admission de roue (36a, 36b, 116a, 116b), les première à quatrième soupapes d'échappement de roue (50a, 50b, 132a, 132b), la soupape (106) mobile en permanence et la soupape de séparation (90) pouvant être commandées au moins dans un état ouvert et dans un état fermé à l'aide d'un signal électrique envoyé par un dispositif de commande du système de freinage.

2. Système de freinage selon la revendication 1, la première soupape de retenue (100a) étant orientée de telle sorte qu'un déplacement de liquide de frein de la première pompe (54a) à la soupape de séparation (90) à travers la première soupape de retenue (100a) soit empêché et/ou que la deuxième soupape de retenue (100b) soit orientée de telle sorte qu'un déplacement de liquide de frein de la deuxième pompe (54b) à la soupape de séparation (90) à travers la deuxième soupape de retenue (100b) soit empêché.

3. Système de freinage selon la revendication 1 ou 2, une première chambre d'accumulation (60a) du système de freinage étant reliée de telle sorte de façon hydraulique au premier cylindre de frein de roue (42a) qu'un neuvième volume de liquide de frein puisse être déplacé du premier cylindre de frein de roue (42a) jusque dans la première chambre d'accumulation (60a) et/ou une deuxième chambre d'accumulation (60b) du système de freinage étant reliée de telle sorte de façon hydraulique au deuxième cylindre de frein de roue (42b) qu'un dixième volume de liquide de frein puisse être déplacé du deuxième cylindre de frein de roue (42b) jusque dans la deuxième chambre d'accumulation (60b).

4. Système de freinage selon la revendication 3, un déplacement de liquide de frein pouvant être commandé du premier cylindre de frein de roue (42a) à la première chambre d'accumulation (60a) à l'aide de la première soupape d'échappement de roue (50a) du système de freinage.

5. Système de freinage selon l'une quelconque des revendications précédentes, le système de freinage comprenant un générateur à l'aide duquel un couple de frein de générateur peut être exercé au moins sur une roue associée au troisième cylindre de frein de roue (102a, 102b).

6. Système de freinage selon l'une quelconque des revendications précédentes, la première pompe (54a), la deuxième pompe (54b) et la troisième pompe (104) étant disposées sur un arbre (144) commun d'un moteur (146).

7. Système de freinage selon l'une quelconque des revendications précédentes, le système de freinage comportant exactement quatre cylindres de frein de roue (42a, 42b, 102a, 102b) avec le premier cylindre de frein de roue (42a), le deuxième cylindre de frein de roue (42b), le troisième cylindre de frein de roue (102a) et le quatrième cylindre de frein de roue (102b).

8. Système de freinage selon l'une quelconque des revendications précédentes, le dispositif de commande du système de freinage étant conçu pour recevoir une directive de freinage externe mise à disposition du composant adapté au véhicule et, après réception de la directive de freinage externe, pour commander la soupape de séparation (90) dans un état au moins en partie ouvert et commander la première pompe (54a) et/ou la deuxième pompe (54b) en tenant compte de la directive de freinage externe de telle sorte que le septième volume de liquide de frein puisse être pompé hors du réservoir de liquide de frein (20) jusque dans le premier cylindre de frein de roue (42a) via la soupape de séparation (90) au moins en partie ouverte et/ou que le huitième volume de liquide de frein puisse être pompé hors du réservoir de liquide de frein (20) jusque dans le deuxième cylindre de frein de roue (42b) via la soupape de séparation (90) au moins en partie ouverte.

9. Véhicule avec un système de freinage selon l'une quelconque des revendications précédentes.

10. Procédé pour faire fonctionner un système de freinage d'un véhicule avec un maître-cylindre de frein (18), un réservoir de liquide de frein (20), un premier circuit de frein (10a) associé à exactement une roue (12a) avec une première pompe (54a) et un premier cylindre de frein de roue (42a) relié de façon hydraulique au maître-cylindre de frein (18) via une première soupape d'inversion (30a) et une première soupape d'admission de roue (36a) et à un côté d'aspiration de la première pompe (54a) via une première soupape d'échappement de roue (50a), un deuxième circuit de frein (10b) associé à exactement une roue (12b) avec une deuxième pompe (54b) et un deuxième cylindre de frein de roue (42b) relié au maître-cylindre de frein (18) via une deuxième soupape d'inversion (30b) et une deuxième soupape d'admission de roue (36b) et à un côté d'aspiration de la deuxième pompe (54b) via une deuxième soupape d'échappement de roue (50b), un troisième circuit de frein (14) découplé du maître-cylindre de frein (18) et associé à exactement deux roues (16a et 16b) avec une troisième pompe (104) couplée au réservoir de liquide de frein (20), un troisième cylindre de frein de roue (102a) relié de façon hydraulique à la troisième pompe (104) via une troisième soupape d'admission de roue (116a), un quatrième cylindre de frein de roue (102b) relié de façon hydraulique à la troisième pompe (104) via une quatrième soupape d'admission de roue (116b) et une soupape de séparation (90) couplée au réservoir de liquide de frein (20), la première pompe (54a) étant reliée de façon hydraulique à la soupape de séparation (90) via une première soupape de retenue (100a) et la deuxième pompe (54b) étant reliée à la soupape de séparation (90) via une deuxième soupape de retenue (100b), le troisième cylindre de frein de roue (102a) étant relié de façon hydraulique, via une troisième soupape d'échappement de roue (132a), le quatrième cylindre de frein de roue (102b) étant relié de façon hydraulique, via une quatrième soupape d'échappement de roue (132b), et le troisième pompe (104) étant relié de façon hydraulique, via une soupape (106) mobile en permanence, au réservoir de liquide de frein (20) et le système de freinage comprenant exactement douze soupapes (30a, 30b, 36a, 36b, 50a, 50b, 90, 106, 116a, 116b, 132a, 132b) commandables comprenant les première et deuxième soupapes d'inversion (30a, 30b), les première à quatrième soupapes d'admission de roue (36a, 36b, 116a, 116b), les première à quatrième soupapes d'échappement de roue (50a, 50b, 132a, 132b), la soupape mobile en permanence (106) et la soupape de séparation (90) pouvant être commandées au moins dans un état ouvert et dans un état fermé à l'aide d'un signal électrique envoyé par un dispositif de commande du système de freinage, avec les étapes suivantes :
la réception d'une directive de freinage externe envoyée par une composante propre au véhicule (S1) ;
la commande de la soupape de séparation (90) dans un état au moins en partie ouvert (S2) ; et
l'actionnement de la première pompe (54a) et/ou de la deuxième pompe (54b) en tenant compte de la directive de freinage externe reçue de telle sorte qu'un premier volume de liquide de frein soit pompé hors du réservoir de liquide de frein (20) jusque dans le premier cylindre de frein de roue (42a) via la soupape de séparation (90) au moins en partie ouverte et/ou qu'un deuxième volume de liquide de frein soit pompé hors du réservoir de liquide de frein (20) jusque dans le deuxième cylindre de frein de roue (42b) via la soupape de séparation (90) au moins en partie ouverte (S3).
